# EUROPEAN PATENT APPLICATION

(11) **EP 2 506 204 A1**
(43) Date of publication of application: **03.10.2012**
(21) Application number: 11160261.1
(22) Date of filing: 29.03.2011
(51) Int. Cl.: G06Q 20/00, H04M 1/725, G06F 3/01

(54) **Mobile wireless communications device for selecting a payment account to use with a payment processing system based upon a movement sensor or image sensor and associated methods**

(71) Applicant: Research In Motion Limited, Waterloo, ON N2L 3W8 (CA)
(72) Inventor: Adams Neil Patrick, Waterloo Ontario N2L 3W8 (CA); Chin, Eugene, Mississauga Ontario L4W 0B5 (CA); Bukurak, David, Ottawa Ontario K2K 3K1 (CA)
(74) Representative: Noble, Nicholas

(57) **Abstract**

A mobile wireless communications device includes a near field communications (NFC) device, a motion sensing device, and a memory configured to store access information for each of a plurality of payment accounts. A processor cooperates with the NFC device, the motion sensing device, and the memory. The processor is configured to recognize a movement pattern based upon the motion sensing device, determine a given payment account from among the plurality thereof based upon the movement pattern, and send corresponding access information for the given payment account to a transaction terminal via the NFC device. In some applications, the processor may determine a given payment account from among the plurality thereof based upon an image associated with a transaction terminal and captured by an optical sensor, and send corresponding access information for the given payment account to the transaction terminal via the NFC device.

## Description

### Technical Field

The present disclosure relates to communications systems, and, more particularly, to mobile wireless communications systems and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters.

### Brief Description of the Drawings

FIG. 1A is a schematic block diagram of a payment processing system in accordance with an example embodiment.

FIG. 1B is a flowchart of a method of operating the payment processing system of FIG. 1A.

FIG. 2A is a schematic block diagram of another payment processing system in accordance with an example embodiment.

FIG. 2B is a flowchart of a method of operating the payment processing system of FIG. 2A.

FIG. 3A is a schematic block diagram of a further payment processing system in accordance with an example embodiment.

FIG. 3B is a schematic block diagram of a further payment processing system in accordance with an alternative example embodiment.

FIG. 3C is a schematic block diagram of a further payment processing system in accordance with an additional example embodiment.

FIG. 3D is a flowchart of a method of operating the payment processing system of FIG. 3A.

FIG. 4A is a schematic block diagram of yet another payment processing system in accordance with an example embodiment.

FIG. 4B is a schematic block diagram of yet another payment processing system in accordance with an alternative example embodiment.

FIG. 4C is a schematic block diagram of yet another payment processing system in accordance with an additional example embodiment.

FIG. 4D is a flowchart of a method of operating the payment processing system of FIG. 4A.

FIG. 5A is a schematic block diagram of still a further payment processing system in accordance with an example embodiment.

FIG. 5B is a schematic block diagram of the further payment processing system in accordance with an alternative example embodiment.

FIG. 5C is a schematic block diagram of the further payment processing system in accordance with an additional example embodiment.

FIG. 5D is a flowchart of a method of operating the payment processing system of FIG. 5A.

FIG. 6A is a schematic block diagram of an additional payment processing system in accordance with an example embodiment.

FIG. 6B is a schematic block diagram of the additional payment processing system in accordance with an alternative example embodiment.

FIG. 6C is a schematic block diagram of the additional payment processing system in accordance with an additional example embodiment.

FIG. 6D is a flowchart of a method of operating the payment processing system of FIG. 6A.

FIG. 7 is a schematic block diagram illustrating example components of a mobile wireless communications device that may be used with the payment processing systems of FIGS. 1A, 2A, 3A, 3B, 3C, 4A, 4B, 4C, 5A, 5B, 5C, 6A, 6B, and 6C.

### Detailed Description

The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime and multiple prime notation is used to indicate similar elements in related embodiments.

Generally speaking, a mobile wireless communications device may include a near field communications (NFC) device, a motion sensing device, a memory configured to store access information for each of a plurality of payment accounts, and a processor cooperating with the NFC device, the motion sensing device, and the memory. The processor may be configured to recognize a movement pattern based upon the motion sensing device, determine a given payment account from among the plurality thereof based upon the movement pattern, and send corresponding access information for the given payment account to a transaction terminal via the NFC device.

The motion sensing device may comprise at least one of an accelerometer, a gyroscope, a magnetometer, or an optical sensor. In addition, the mobile wireless communications device may include an input device, and the processor may be further configured to associate a payment account with a movement pattern based upon the input device.

The memory may be configured to store a plurality of movement patterns, and each of the plurality of payment accounts may be associated with a given movement pattern. The processor may determine the given payment account by matching the recognized movement pattern to a stored movement pattern of the plurality thereof.

The mobile wireless communications device may include a position determining device, and the processor may be configured to determine a geospatial location of the mobile wireless communications device when in proximity to a transaction terminal. The processor may further be configured to also determine the given payment account based upon the geospatial location. In some applications, the processor may be configured to determine at least one of a date or a time, may also determine the given payment account based upon at least one of the date or the time.

A related method is directed to a method of operating a mobile wireless communications device. The method may comprise storing access information for each of a plurality of payment accounts in a memory of the mobile wireless communications device, and recognizing movement of the mobile wireless communications in a movement pattern based upon a movement sensing device, using a processor of the mobile wireless communications device. The method may also include determining a given payment account from among the plurality thereof that is associated with the movement pattern, using the processor, and sending the corresponding access information for the given payment account to a transaction terminal via a near field communications (NFC) device of the mobile wireless communications device.

Another embodiment is directed to a mobile wireless communications device that may include a near field communications (NFC) device, an optical sensor, a memory configured to store access information for each of a plurality of payment accounts, and a processor cooperating with the NFC device, the optical sensor, and the memory. The processor may be configured to determine a given payment account from among the plurality thereof based upon an image associated with a transaction terminal and captured by the optical sensor, and send corresponding access information for the given payment account to the transaction terminal via the NFC device.

Each payment account may have a respective logo associated therewith, and the image may comprise the logo for the given payment account. The memory may also be configured to store a plurality of enrollment images. Each enrollment image may comprise a logo, and each logo may represent at least one of a credit card type or a business name. The processor may be configured to determine the given payment account that is associated with the image by matching the image to a given one of the plurality of stored enrollment images.

Each payment account may have a respective QR code associated therewith, and the image associated with the transaction terminal may comprise the QR code for the given payment account. The memory may also be configured to store a plurality of enrollment images, each enrollment image comprising a QR code, each QR code representing a credit card. In addition, the processor may be configured to determine the given payment account that is associated with the image by matching the image to a given one of the plurality of stored enrollment images.

In some applications, the mobile wireless communications device may have an input device, and the processor may be further configured to capture an enrollment image using the image sensor and store the captured enrollment image in the memory, and to associate a given payment account with the stored enrollment image based upon the input device.

The mobile wireless communications device may include a position determining device, and the processor may be configured to cooperate with the position determining device to determine a geospatial location of the mobile wireless communications device when in proximity to a transaction terminal. The processor may further be configured to also determine the given payment account based upon the geospatial location. In addition, the processor may be configured to determine at least one of a date or a time, and may also also determine the given payment account based upon at least one of the date or the time.

A related method is a method of operating a mobile wireless communications device. The method may include storing access information for each of a plurality of payment accounts in a memory of the mobile wireless communications device, and determining a given payment account from among the plurality thereof that is associated with an image associated with a transaction terminal and captured by an optical sensor of the mobile wireless communications device, using a processor of the mobile wireless communications device. The method may also include sending the corresponding access information for the given payment account to the transaction terminal via a near field communications (NFC) device of the mobile wireless communications device.

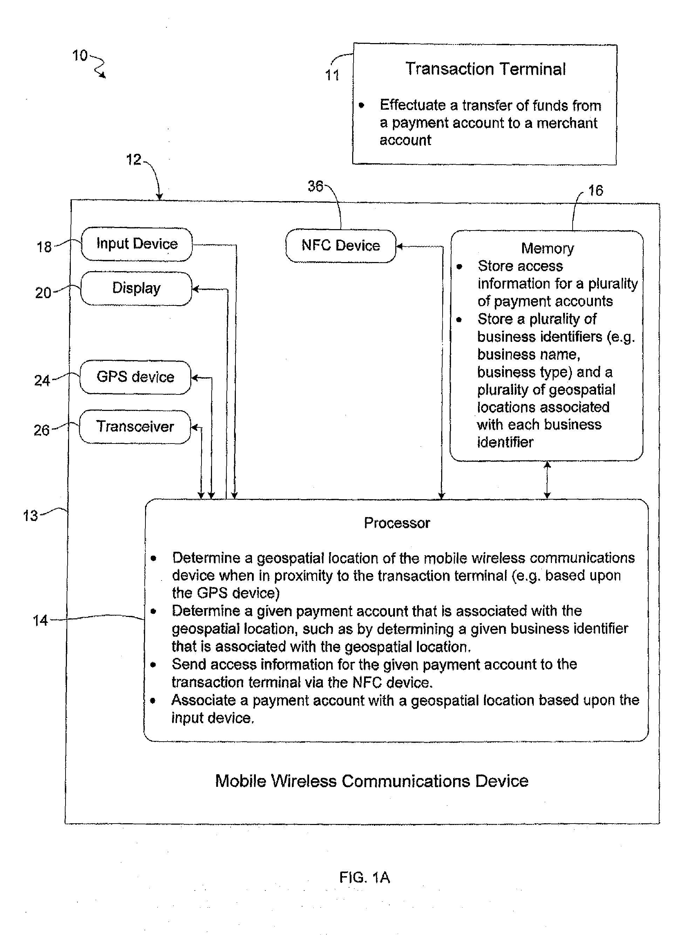

A variety of embodiments of the present disclosure will be discussed hereinbelow with reference to FIG. 1A, 2A, 3A-3C, 4A-4C, 5A-5C, and 6A-6C. It should be understood, though, that these embodiments are not mutually exclusive, and that the components and functionality of one embodiment may be combined with those of other embodiments.

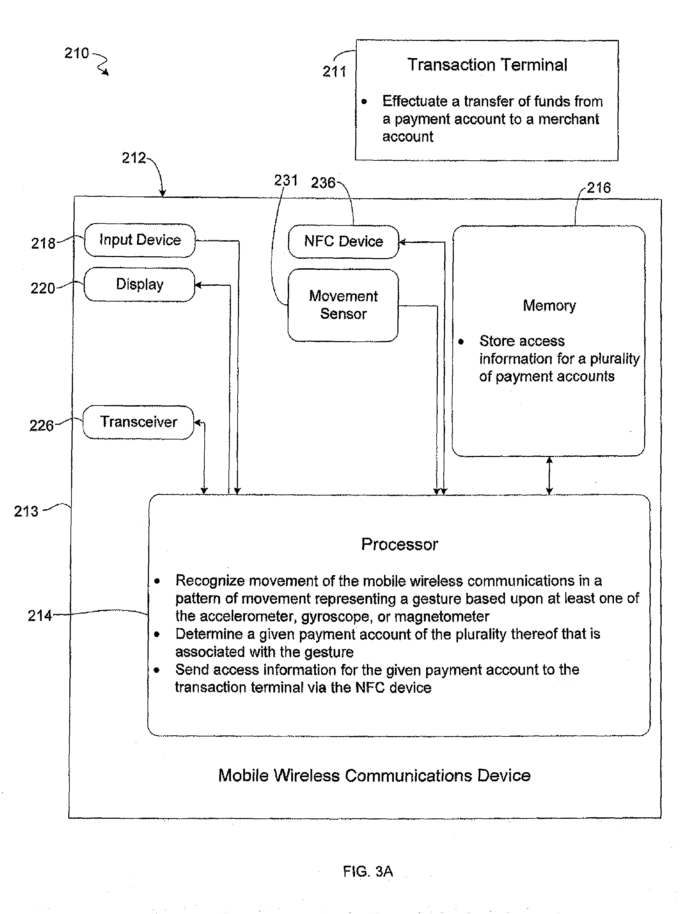

With initial reference to FIG. 3A, an example embodiment of a payment processing system **210** is now described. The payment processing system **210** includes a transaction terminal **211,** such as a point-of-sale (POS) terminal, for example. The transaction terminal **211** is configured to effectuate a transfer of funds from a payment account, such as a checking account, savings account, gift card, debit card, payment service (e.g., PayPal), or a credit card, to a merchant account. This transfer may be effectuated according to a variety of suitable methods which require no further discussion herein.

The payment processing system **210** also includes a mobile wireless communications device **212.** Example mobile wireless communications devices **212** may include portable or personal media players (e.g., music or MP3 players, video players, etc.), remote controls (e.g., television or stereo remotes, etc.), portable gaming devices, portable or mobile telephones, smartphones, tablet computers, etc. In this embodiment, the mobile wireless communications device **212** is capable of storing access information for a plurality of payment accounts, and can select an appropriate payment account for payment to a merchant based upon movement of the mobile wireless communications device in a pattern.

The mobile wireless communications device **212** includes a processor **214** coupled to a memory **216.** The memory **216** may include volatile and non-volatile portions, and is configured to store access information for a plurality of payment accounts. The payment accounts may comprise credit card accounts, bank accounts, gift card accounts, payment services (e.g., PayPal), or even rewards card accounts, for example. The access information is information that the transaction terminal **211** uses to effectuate the transfer of funds from the payment account to the merchant account, such as an account number, routing number, PIN, etc.

Also coupled to the processor **214** are an input device **218,** a display **220,** a transceiver **226,** and a NFC device **236.** A housing **213** carries the processor **214,** the memory **216,** the input device **218,** the display **220,** the transceiver **226,** and the NFC device **236.** The input device **218** may comprise a keyboard, a touch sensitive pad, a trackball, an optical trackpad, a thumbwheel, a button, or other suitable device, for example. It should be appreciated that in some applications, the display **220** may comprise a touch sensitive display, and may therefore serve as the input device **218.** In addition, the transceiver **226** may comprise a cellular transceiver, and may be configured to perform both voice and data cellular communications. A device movement sensor **231** is also coupled to the processor **214.**

NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used.

The processor **214** is configured to recognize movement of the mobile wireless communications device **212** in a pattern of movement representing a "gesture" based upon the movement sensor **231.** As an example, a "gesture" may be holding the mobile wireless communications device **212** such that it is perpendicular with the ground, rotating it such that it is parallel to the ground, and then shaking it twice. Indeed, a "gesture" may be any movement or pattern of movements that the mobile wireless communications device **212** is put through.

The processor **214,** after recognizing the gesture, determines a given payment account of the plurality thereof that is associated with the gesture. The processor **214** then sends access information for the given payment account to the transaction terminal **211** via the NFC device **236.** The transaction terminal **211** may then effectuate a transfer of funds from the given payment account to the merchant account.

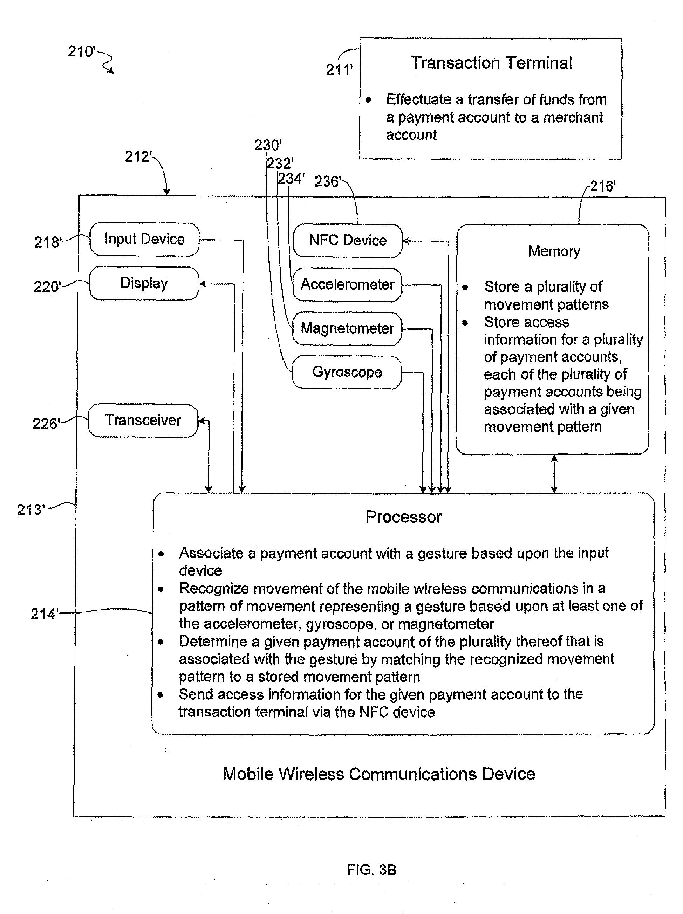

In another example embodiment shown in FIG. 3B, a gyroscope **230',** a magnetometer **232',** and an accelerometer **234'** are coupled to the processor **214'.** The gyroscope **230'** can detect an orientation of the mobile wireless communications device **212',** as well as changes to the orientation. That is, the gyroscope **230'** can detect when the mobile wireless communications device **212'** is turned or pointed in a given direction. In addition, the magnetometer **232'** can determine the cardinal direction in which the mobile wireless communications device **212'** is pointing (e.g. north, south, east, west). Further, the accelerometer **234'** can detect acceleration of the mobile wireless communications device **212'** in any direction, and is therefore also capable of determining a change in the orientation of the mobile wireless communications device.

The mobile wireless communications device **212'** may not have each of the accelerometer **234',** the magnetometer **232',** and the gyroscope **230',** etc., and in some embodiments the mobile wireless communications device **212'** may have just one or two of such motion sensing devices.

The memory **216'** stores a plurality of movement patterns, and each of the plurality of payment accounts is associated with a given movement pattern. The associations between the payment account and a gesture can be manually defined by the processor **214'** based upon the input device **218'.** For example, a list of the stored movement patterns and a list of the payment accounts may be displayed on the display **220',** and the input device **218'** may permit selection of a stored movement pattern and selection of a payment account. The processor **214'** may then associate the selected stored movement pattern with the selected payment account.

In some applications, these associations may be set on an external device, such as a desktop computer, and may then be communicated to the mobile wireless communications device **212'.** Furthermore, once set, these associations may be communicated to an external server, and the mobile wireless communications device **212'** may download the associations upon boot-up or at another suitable time, for example.

In addition, new movement patterns may be recorded and stored in the memory **216'** via cooperation between the processor **214'** and any one of the accelerometer **234,** the magnetometer **232,** or the gyroscope **230.** These movement patterns may then be associated with payment accounts, as described above.

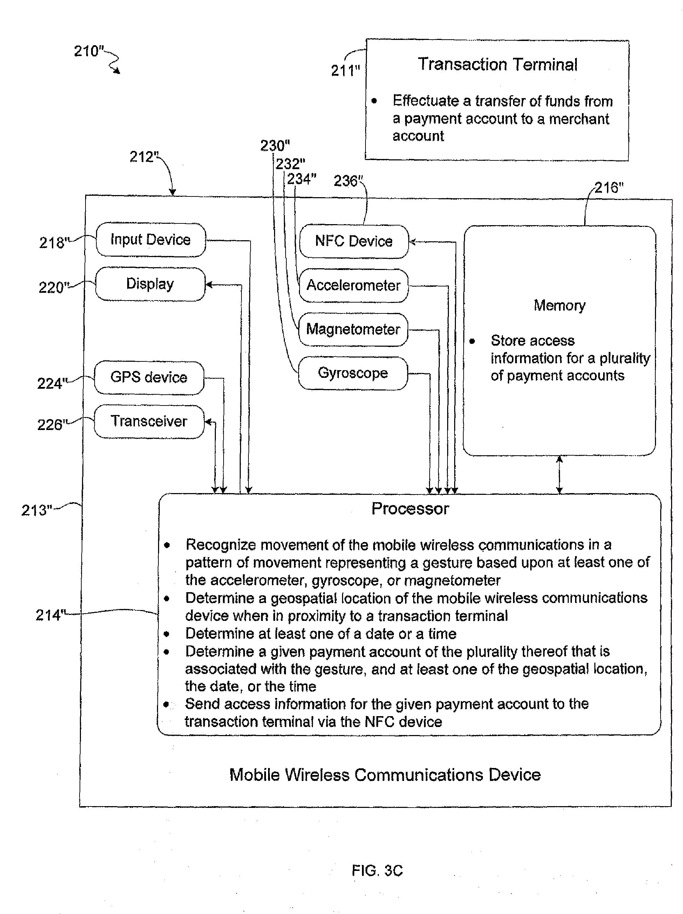

Another embodiment of the payment processing system **210"** is now described with reference to FIG. 3C. Here, the mobile wireless communications device **212"** includes a position determining device, such as a GPS device **224".** The processor **214"** determines a geospatial location of the mobile wireless communications device **210"** when in proximity to the transaction terminal **211".** The processor **214"** also determines a current date or time.

In addition to determining the given payment account that is associated with the recognized gesture, the processor **214"** determines a given payment account that is also associated with at least one of the geospatial location, the date, or the time. This may be helpful in situations where more than one payment account is associated with a given gesture. The geospatial location of the mobile wireless communications device **210",** the date, or the time may then be useful in selecting between the payment accounts.

For example, the plurality of payment accounts may include a corporate VISA card, a personal VISA card, a corporate American Express card, and a personal American Express card. The stored movement patterns may include an VISA movement pattern and an American Express movement pattern. The geospatial location of the mobile wireless communications device **210",** the date, or the time, may be used by the processor **214"** to determine whether the corporate VISA card or the personal VISA card should be selected when the mobile wireless communications device is moved in the VISA movement pattern.

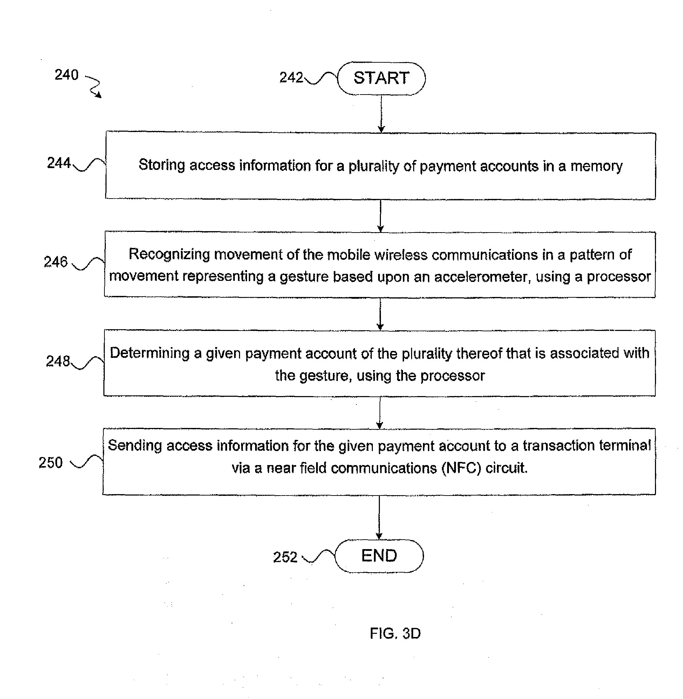

A method aspect of this embodiment is now described with reference to the flowchart **240** of FIG. 3D. After the start (Block **242),** access information for a plurality of payments is stored in a memory (Block **244).** Then, movement of the mobile wireless communications device in a pattern of movement representing a gesture is recognized based upon an accelerometer, using a processor (Block **246).** Next, a given payment account of the plurality thereof that is associated with the gesture is determined, using the processor **214** (Block **248).** Thereafter, access information for the given payment account is sent to the transaction terminal via a NFC device **236** (Block **250).** Block **252** indicates the end of the method.

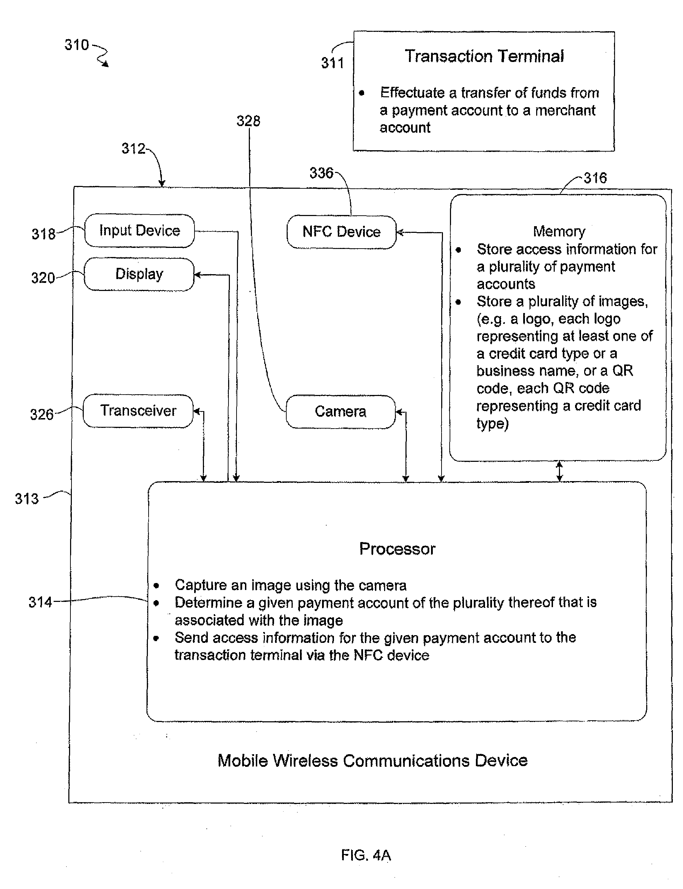

Another example embodiment of a payment processing system **310** is now discussed with reference to FIG. 4A. In this embodiment, the mobile wireless communications device **312** can take a picture of a logo, such as a credit card logo, and select the proper payment account based upon that picture. The transaction terminal **311,** and most portions of the mobile wireless communications device **312** are similar to those described above and require no further discussion herein.

Here, the memory **316** stores access information for a plurality of payment accounts. The memory **316** also stores a plurality of images. By way of example, the images may comprise a logo, a QR code, etc. Each logo may represent a credit card type or a business name, while each QR code may represent a credit card type or a business identity, for example. Other types of images may also be used, such as bar codes, etc.

The processor **314** captures an image using the camera **328** (or other suitable optical sensor). The processor **314** then determines a given payment account of the plurality thereof that is associated with the image, such as by matching the image to a given one of the plurality of stored images. The reference images need not be stored by the memory **316** in all embodiments (e.g., they may be stored on an Internet server, etc., with which the processor **314** cooperates to determine the given payment account). Next, the processor **314** sends access information for the given payment account to the transaction terminal **311** via the NFC device **336.** The transaction terminal **311** may then effectuate a transfer of funds from the given payment account to the merchant account.

As an example, a picture of an VISA Credit Card logo may be taken, and the processor **314** may determine that a corporate VISA Credit Card is associated with the image of the VISA Credit Card logo. The processor **314** may then send access information for the corporate VISA Credit Card to the transaction terminal **311.**

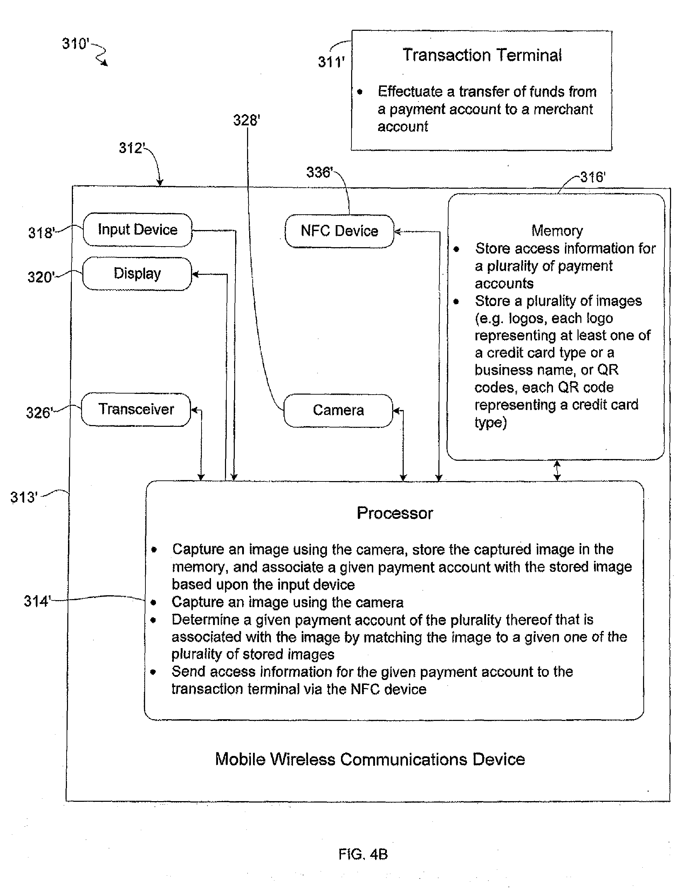

In another example embodiment shown in FIG. 4B, the associations between the payment account and an image can be manually defined by the processor **314'** based upon the input device **318'.** For example, the processor **314'** may display the stored images on the display **320',** and may also display a list of the payment accounts on the display **320'.** The input device **318'** may permit selection of a stored image and may permit selection of a payment account, and the processor **314'** may associate the selected stored image with the stored payment account.

In some cases, a new image may be captured and stored in the memory **316',** and then associated with a payment account. For example, an image of a logo may be captured by the camera **328',** and the processor **314'** may display on the display **320'** an association setting option allowing the association of the image with a given payment account. In some applications, these associations may be set on an external device, such as a personal computer, and may then be communicated to the mobile wireless communications device **312.** Furthermore, once set, these associations may be communicated to an external server, and the mobile wireless communications device **312** may download the associations upon boot-up or at another suitable time, for example.

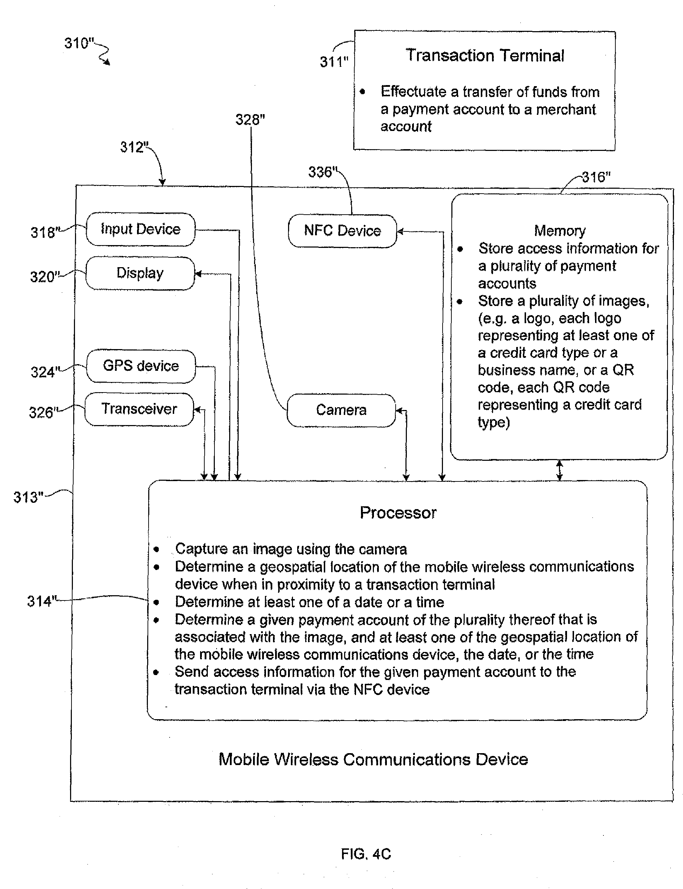

Another embodiment of the payment processing system **310"** is now described with reference to FIG. 4C. Here, the mobile wireless communications device **312"** includes a position determining device, such as a GPS device **324".** The processor **314"** determines a geospatial location of the mobile wireless communications device **310"** when in proximity to the transaction terminal **311".** The processor **314"** also determines a current date or time.

In addition to determining the given payment account that is associated with an image, the processor **314"** determines a given payment account that is also associated with at least one of the geospatial location, the date, or the time. This may be helpful in situations where more than one payment account is associated with a given image. The geospatial location of the mobile wireless communications device **310",** the date, or the time may then be used in selecting between the payment accounts.

For example, the plurality of payment accounts may include a corporate VISA card, a personal VISA card, a corporate American Express card, and a personal American Express card. The stored image may include an VISA logo and a American Express logo. The position or location of the mobile wireless communications device **310",** the date, or the time, may be used by the processor **314"** to determine whether the corporate VISA card or the personal VISA card should be selected when the mobile wireless communications device captures an VISA logo. For instance, if an VISA logo is captured, and the geospatial location of the mobile wireless communications device **310"** is a coffee shop, the personal VISA card may be selected, whereas if the geospatial location of the mobile wireless communications device is an office supply store, the corporate VISA card may be selected.

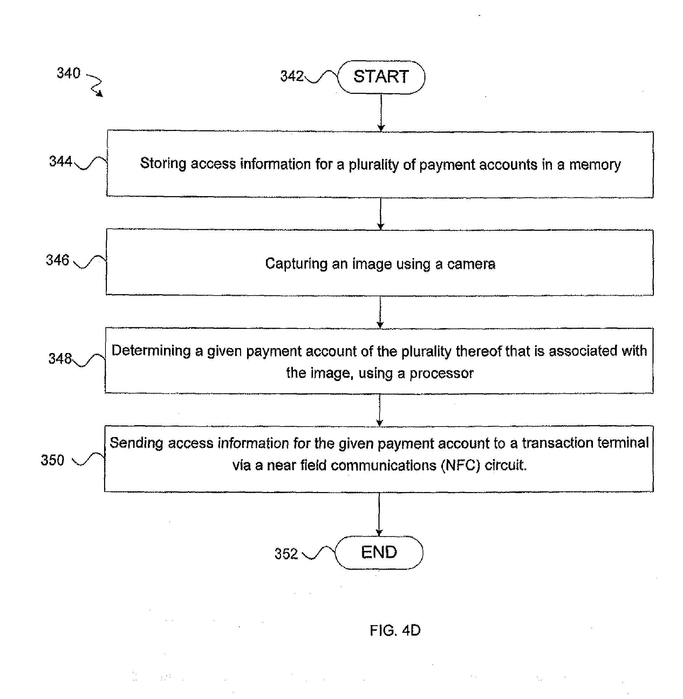

A method aspect of this embodiment is now described with reference to the flowchart **340** of FIG. 4D. After the start (Block **342),** access information for a plurality of payment accounts is stored in a memory (Block **344).** Next, an image is captured using a camera (Block **346).** Thereafter, a given payment account of the plurality thereof that is associated with the image is determined, using a processor (Block **348).** Access information for the given payment account is then sent to the transaction terminal via a NFC communications circuit (Block **350).** Block **352** indicates the end of the method.

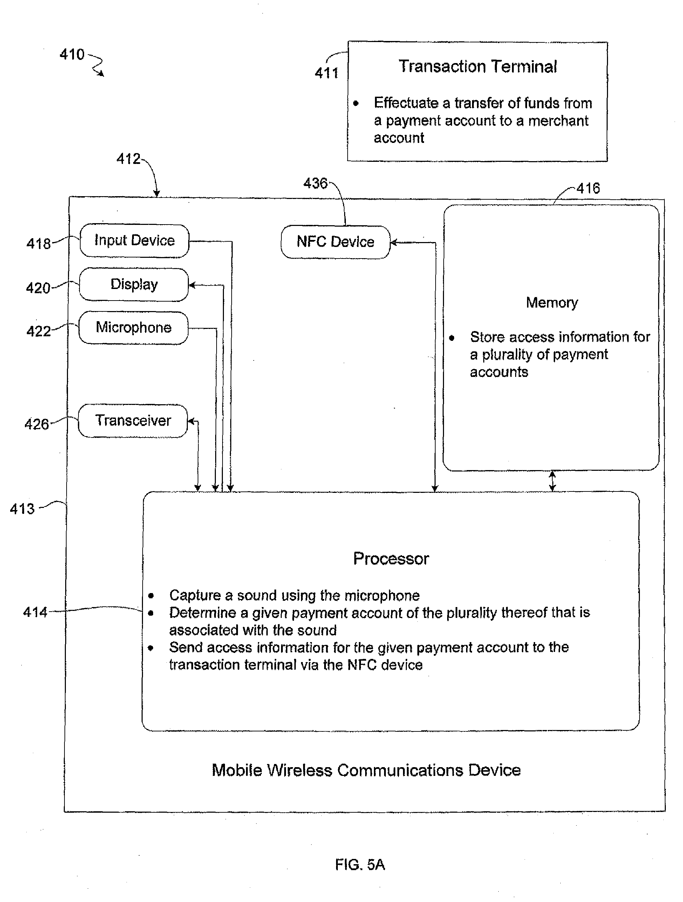

Another example embodiment of a payment processing system **410** is discussed now with reference to FIG. 5A. Here, the mobile wireless communications device **412** may select the proper payment account based upon a sound. The transaction terminal **411,** and most portions of the mobile wireless communications device **412** are similar to those described above and require no further discussion herein.

In the example embodiment, the memory **416** stores access information for a plurality of payment accounts. The memory **416** also stores a plurality of sounds, and each sound is associated with one of the plurality of payment accounts.

The processor **414** is configured to record a sound using the microphone **422,** and to determine a given payment account of the plurality thereof that is associated with the sound. This may be done by matching the sound to a given one of the plurality of stored sounds, using voice or sound recognition techniques, for example. The processor **414** then sends access information for the given payment account to the transaction terminal **411** via the NFC device **436.**

By way of example, the processor **414** can record a sound via the microphone **422,** and the sound may be "American Express Card." Based upon this sound, the processor **414** may select the American Express credit card and send account access information therefore to the transaction terminal **411.** The transaction terminal **411** may then effectuate the transfer of funds from the payment account to the merchant account.

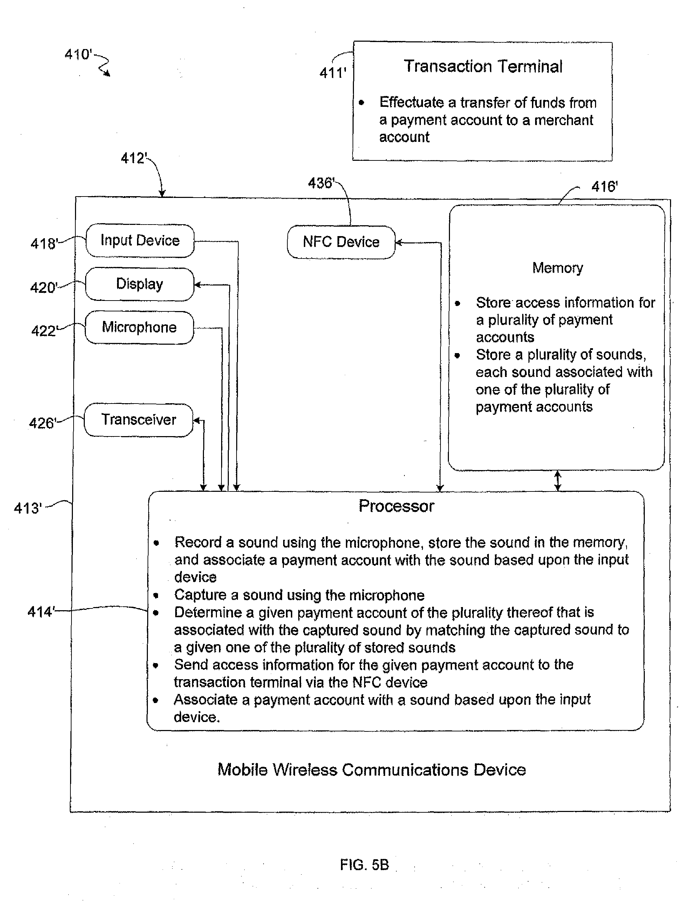

In a more detailed embodiment shown in FIG. 5B, the associations between the payment account and a sound can be manually defined by the processor **414'** based upon the input device **418'.** For example, the processor **414'** may display the stored sounds on the display **420',** and may also display a list of the payment accounts on the display. The input device **418'** may permit selection of a stored sound and may permit selection of a payment account, and the processor **414'** may associate the selected stored sound with the stored payment account.

In some cases, a new sound may be recorded and stored in the memory **416',** and then associated with a payment account. For example, a sound may be captured by the microphone **422',** and the processor **414'** may display on the display **420'** an association setting option allowing the association of the sound with a given payment account. In some applications, these associations may be set on an external device, such as a personal computer, and may then be communicated to the mobile wireless communications device **412'.** Furthermore, once set, these associations may be communicated to an external server, and the mobile wireless communications device **412'** may download the associations upon boot-up or at another suitable time, for example.

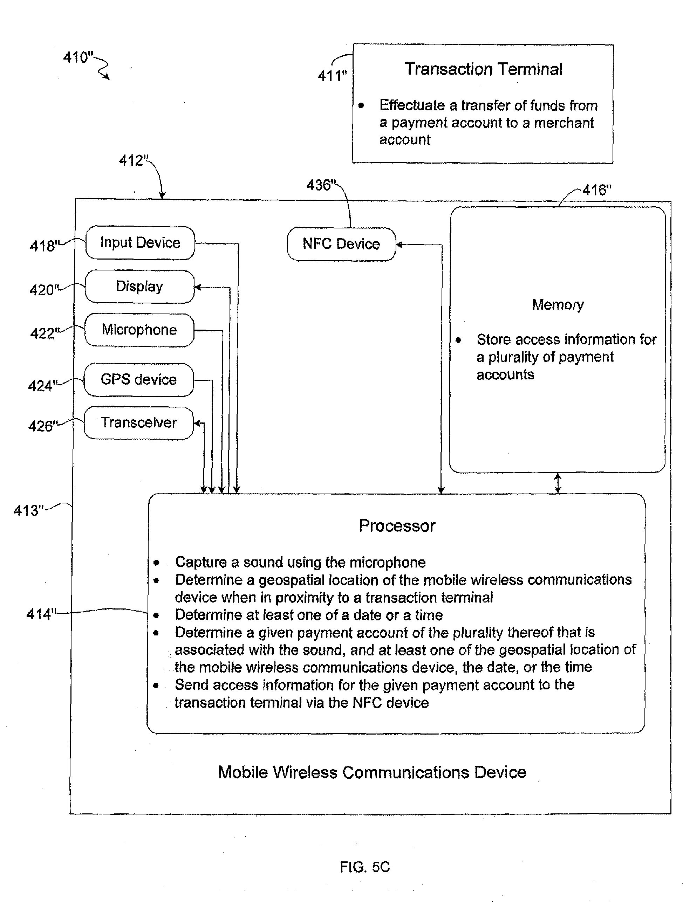

Another embodiment of the payment processing system **410"** is now described with reference to FIG. 5C. Here, the mobile wireless communications device **412"** includes a position determining device, such as a GPS device **424".** The processor **414"** determines a position or location of the mobile wireless communications device **410"** when in proximity to the transaction terminal **411".** The processor **414"** also determines a current date or time.

In addition to determining the given payment account that is associated with a sound, the processor **414"** determines a given payment account that is also associated with at least one of the geospatial location, the date, or the time. This may be helpful in situations where more than one payment account is associated with a given sound. The geospatial location of the mobile wireless communications device **410",** the date, or the time may then be used in selecting between the payment accounts.

For example, the plurality of payment accounts may include a corporate VISA card, a personal VISA card, a corporate American Express card, and a personal American Express card. The stored sound may include an VISA sound and a American Express sound. The position or location of the mobile wireless communications device **410",** the date, or the time, may be used by the processor **414"** to determine whether the corporate VISA card or the personal VISA card should be selected when the mobile wireless communications device records an VISA sound. For instance, if an VISA sound is recorded, and the geospatial location of the mobile wireless communications device **410"** is a coffee shop, the personal VISA card may be selected, whereas if the geospatial location of the mobile wireless communications device is an office supply store, the corporate VISA card may be selected.

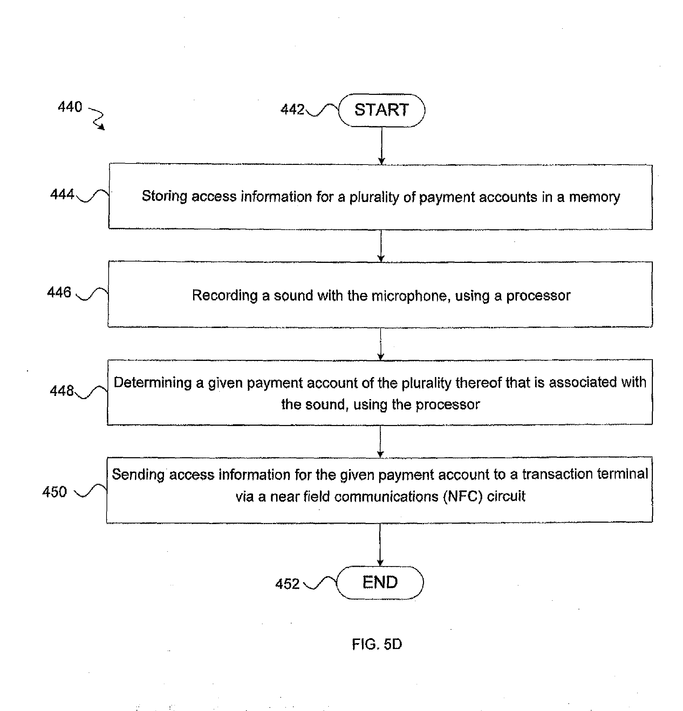

A method aspect of this embodiment is now described with respect to the flowchart **440** of FIG. 5D. After the start (Block **442),** access information for a plurality of payment accounts is stored in the memory **416** (Block **444).** Then, a sound is recorded with the microphone **422,** using the processor **414** (Block **446).** Thereafter, a given payment account of the plurality thereof that is associated with the sound is determined, using the processor **414** (Block **448).** Access information for the given payment account is then sent to the transaction terminal **411** via the NFC device **436** (Block **450).** Block **452** indicates the end of the method.

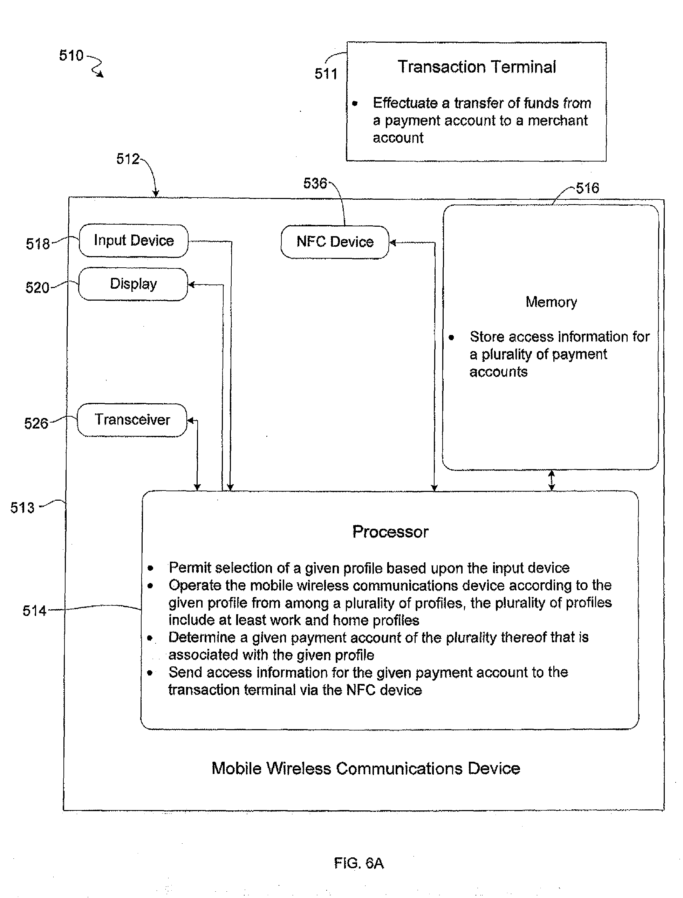

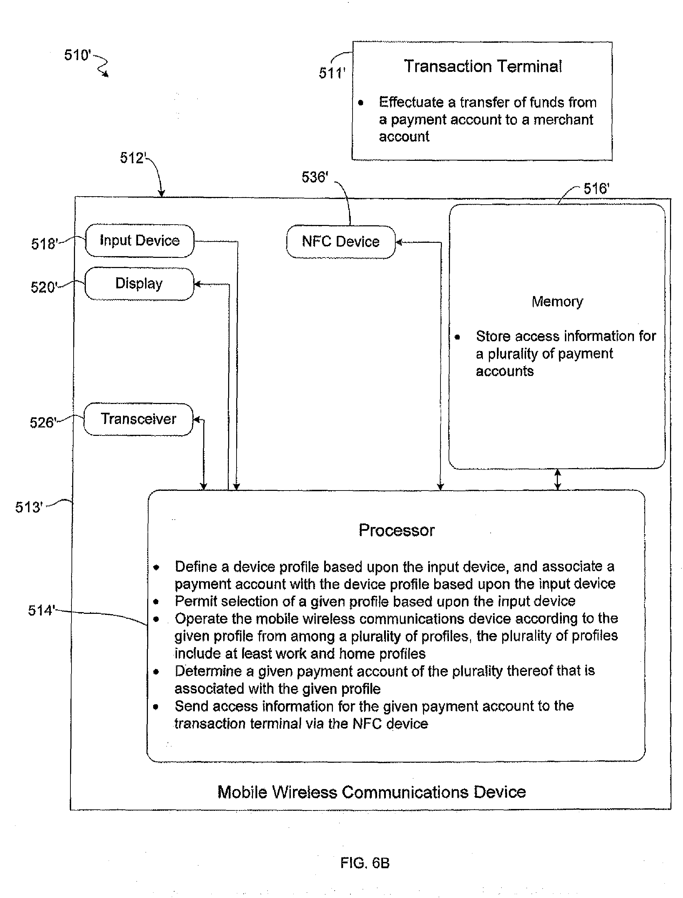

Another example embodiment of a payment processing system **510** is now described with reference to FIG. 6A. Here, the mobile wireless communications device **512** selects the proper payment account based upon a profile, e.g., a device profile. Example device profiles may include selectable alert profiles (e.g., loud, vibrate, silent, phone only, etc). Another example is a "home" profile, which may comprise a phone only profile. Still another example is a "work" profile, which may comprise a vibrate profile. In some implementations these may be considered as a "loud" notification profile vs. a "quiet" notification profile. Other device profiles may comprise a low power consumption profile (e.g., all wireless radios turned on) vs. a high power consumption profile (e.g., select or no wireless radios turned on).

The transaction terminal **511,** and most portions of the mobile wireless communications device **512** are similar to those described above with respect to the mobile wireless communications device **12** shown in FIG. 1A, and require no further discussion herein.

The memory **516** is configured to store access information for a plurality of payment accounts. The processor **514** permits selection of a given profile from among a plurality of profiles, the plurality of profiles including at least work and home profiles, based upon the input device **518,** and operates the mobile wireless communications device **512** based upon the given profile. By operating according to a profile, the mobile wireless communications device **512** will deliver notifications of new messages or calls as dictated by the profile, or will use a set of ring tones as dictated by the profile, for example.

The processor **514** determines a payment account of the plurality thereof that is associated with the given profile. Then, the processor **514** sends access information for the given payment account to the transaction terminal **511** via the NFC device **536.** The transaction terminal **511** may then effectuate a transfer of funds from the given payment account to the merchant account.

By way of example, the processor **514** may be operating the mobile wireless communications device **512** based upon a "work" profile. Therefore, the processor **514** will select the VISA credit card, for example, associated with the work profile, and send account access information therefor to the transaction terminal **511.**

In a more detailed embodiment shown in FIG. 5B, the associations between the payment account and a device profile can be manually defined by the processor **514'** based upon the input device **518'.** For example; the processor **514'** may display the device profiles on the display **520',** and may also display a list of the payment accounts on the display. The input device **518'** may permit selection of a device profile and may permit selection of a payment account, and the processor **514'** may associate the selected device profile with the stored payment account.

In some cases, a new device profile may be created and then associated with a payment account. For example, a new device profile may be created by the input device **518',** and the processor **514'** may display on the display **520'** an association setting option allowing the association of the device profile with a given payment account. In some applications, these associations may be set on an external device, such as a personal computer, and may then be communicated to the mobile wireless communications device **512'.** Furthermore, once set, these associations may be communicated to an external server, and the mobile wireless communications device **512'** may download the associations upon boot-up or at another suitable time, for example.

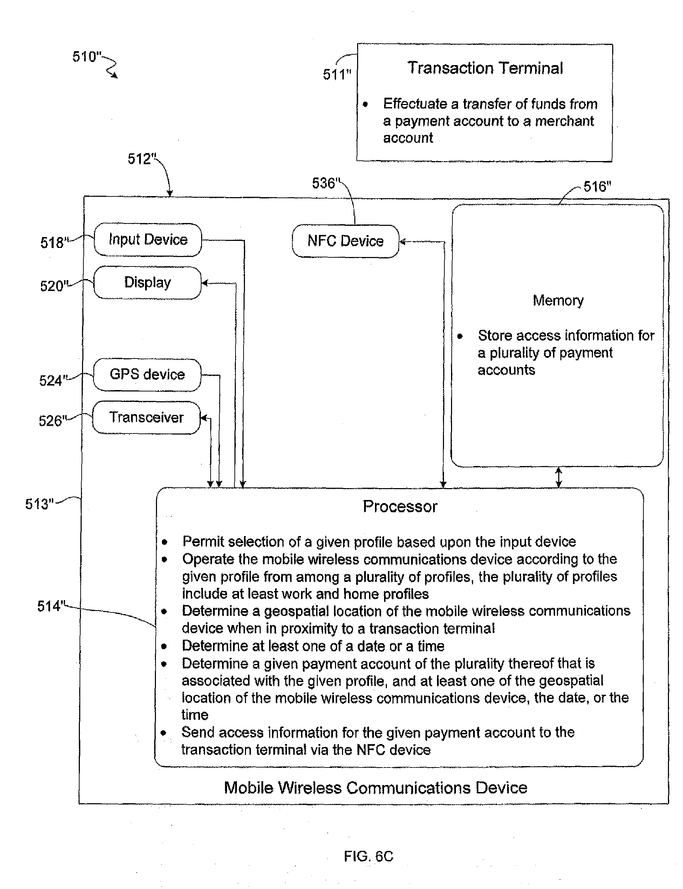

Another embodiment of the payment processing system **510"** is now described with reference to FIG. 6C. Here, the mobile wireless communications device **512"** includes a position determining device, such as a GPS device **524".** The processor **514"** determines a geospatial location of the mobile wireless communications device **510"** when in proximity to the transaction terminal **511".** The processor **514"** also determines a current date or time.

In addition to determining the given payment account that is associated with a device profile, the processor **514"** determines a given payment account that is also associated with at least one of the geospatial location, the date, or the time. This may be helpful in situations where more than one payment account is associated with a device profile. The geospatial location of the mobile wireless communications device **510",** the date, or the time may then be used in selecting between the payment accounts.

For example, the plurality of payment accounts may include a corporate VISA card, a personal VISA card, a corporate American Express card, and a personal American Express card. A work device profile may be associated with the corporate ABC card and the corporate XYZ card. The geospatial location of the mobile wireless communications device **510",** the date, or the time, may be used by the processor **514"** to determine whether the corporate ABC card or the corporate XYZ card should be selected when the mobile wireless communications device is operating according to the work device profile. For instance, if the work device profile is selected, and the geospatial location of the mobile wireless communications device **510"** is a coffee shop, the corporate ABC card may be selected, whereas if the geospatial location of the mobile wireless communications device is an office supply store, the corporate American Express card may be selected.

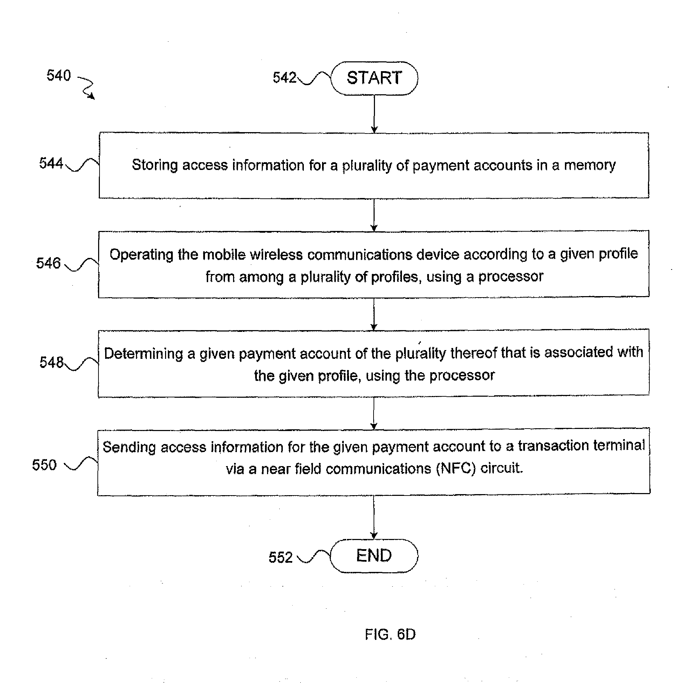

An example method aspect of this embodiment is now described with reference to the flowchart **540** of FIG. 6D. After the start (Block **542),** access information for a plurality of payments accounts is stored in the memory **516** (Block **544).** Then, the mobile wireless communications device **512** is operated according to a given profile from among a plurality of profiles, using the processor **514** (Block **546).** Next, a given payment account of the plurality thereof that is associated with the given profile is determined, using the processor **514** (Block **548) .**

Referring now to FIG. 1A, another payment processing system **10** is now described. Here, the memory **16** is configured to store a plurality of business identifiers and a plurality of geospatial locations associated with each business identifier. The business identifiers may comprise actual business names (e.g. XYZ Coffee, or ABC Pizza), or may comprise business types (e.g. coffee shops, pizza restaurants). By storing a plurality of geospatial locations associated with each business identifier, it is meant that, for example, multiple geospatial locations of XYZ Coffee franchises are stored, and/or that multiple geospatial locations of coffee shops (of any name) are stored. The purpose for this data will be explained in detail below.

Referring to FIG. 1A, the processor **14** may enter a payment mode based upon the input device **18,** or based upon a NFC communication received from the transaction terminal **11** via the NFC device **36.** In the payment mode, a payment account may be manually selected via the input device **18,** or may be selected by the processor **14,** as will be described in detail below.

The processor **14** is configured to determine a geospatial location of the mobile wireless communications device **12** based upon the GPS device **24,** for example, although in some example embodiments a positioning determining device need not be included for determining position (e.g., this may be determined from a network using triangulation, etc.). Another approach is that the transaction terminal **11** may inform the processor **14** of its location, since the mobile wireless communications device **12** and the transaction terminal will be in approximately the same location when they communicate via NFC (i.e., they will be within several centimeters of one another). The processor **14** then determines a given payment account that is associated with the geospatial location, such as by determining a given business identifier that is associated with the geospatial location (these associations may have been previously stored in the memory **16).** However, in some embodiments the associations may be stored elsewhere, such as with a third-party Internet service, and the processor may communicate with this service to determine the given account type, for example.

After making the determination regarding the payment account, the processor **14** sends the access information for the given payment account to the transaction terminal **11** via the NFC device **36.** The processor **14** may display which payment account is being used on the display **20,** and in some applications, may prompt for an approval to be entered via the input device **18** before it sends the access information for the payment account to the transaction terminal **11.**

In some cases, the processor **14** may operate the mobile wireless communications device **12** in a display lock mode based upon the input device **18.** In the display lock mode, the processor **14** may display a lock screen on the display **20.** If the processor **14** is operating the mobile wireless communications device **12** in this display lock mode, it may still display which payment account is being used on the display lock screen via the display **20.**

For example, the processor **14** may determine that the mobile wireless communications device **12** is in an XYZ Coffee franchise, and that a corporate credit card is associated with XYZ Coffee franchises. The processor **14** will then send access information for the corporate credit card account to the transaction terminal **11** in the XYZ Coffee franchise. That is, the processor **12** may thus send the access information for the corporate credit card regardless of which XYZ Coffee Franchise (stored in the memory **16)** the mobile wireless communications device **12** is at.

The processor **14** may also have determined that the mobile wireless communications device **12** is in a XYZ Coffee franchise, that XYZ Coffee is a coffee shop, and that the corporate credit card is associated with coffee shops. Additionally or alternatively, the processor **14** may have determined that the mobile wireless communications device **12** is at a particular XYZ Coffee franchise, and that the corporate credit card is associated with that particular XYZ Coffee location.

The associations between the payment account and the business identifiers can be manually defined by the processor **14** based upon the input device. For example, while at a business location, the processor **14** may display on the display **20** an association setting option allowing the association of that business location with a given payment account. Alternatively, a payment account may be manually selected via the input device **18,** and then the association setting option may allow the association of that business location with the selected payment account. This association setting option may allow the associating of merely that single location, all locations with the same business name, or all locations with the same business type with the given payment account. Furthermore, the processor **14** may display a map on the display **20,** and locations to associate with payment accounts may be selected from the map.

In some embodiments, these associations may be set on an external device, such as a personal computer, and may then be communicated to the mobile wireless communications device **12.** Furthermore, once set, these associations may be communicated to an external server, and the mobile wireless communications device **12** may download the associations upon boot-up or at another suitable time, for example. It should be further appreciated that, in some applications, the processor **14** may allow manual selection of a given payment account to use, without setting an association between that given payment account and the business identifier.

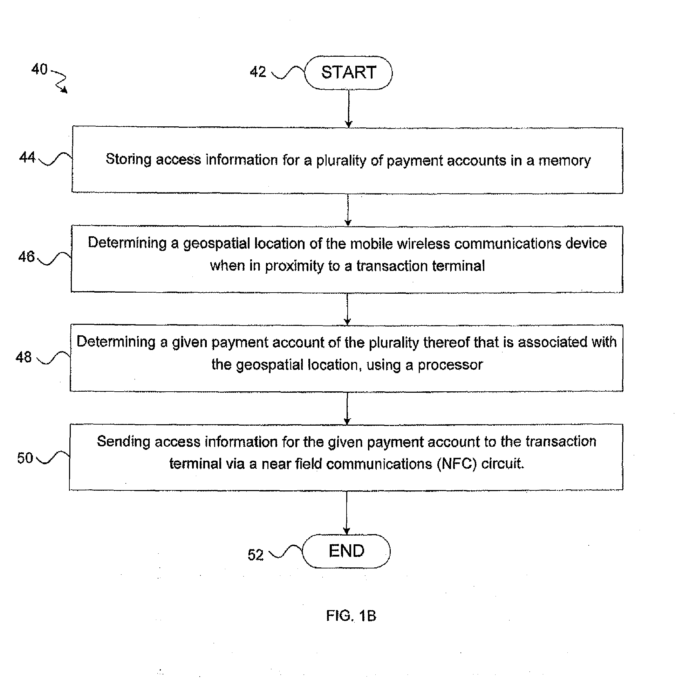

A related method aspect is now described with reference to the flowchart **40** of FIG. 1B. After the start (Block **42),** access information for a plurality of payment accounts is stored in a memory (Block **44).** Next, a geospatial location of the mobile wireless communications device is determined based upon a position determining device (Block **46).** Thereafter, a given payment account of the plurality thereof that is associated with the geospatial location is determined using a processor (Block **48).** Then, access information for the given payment account is sent to the transaction terminal via a near field communications (NFC) device (Block **50).** Block **52** indicates the end of the method.

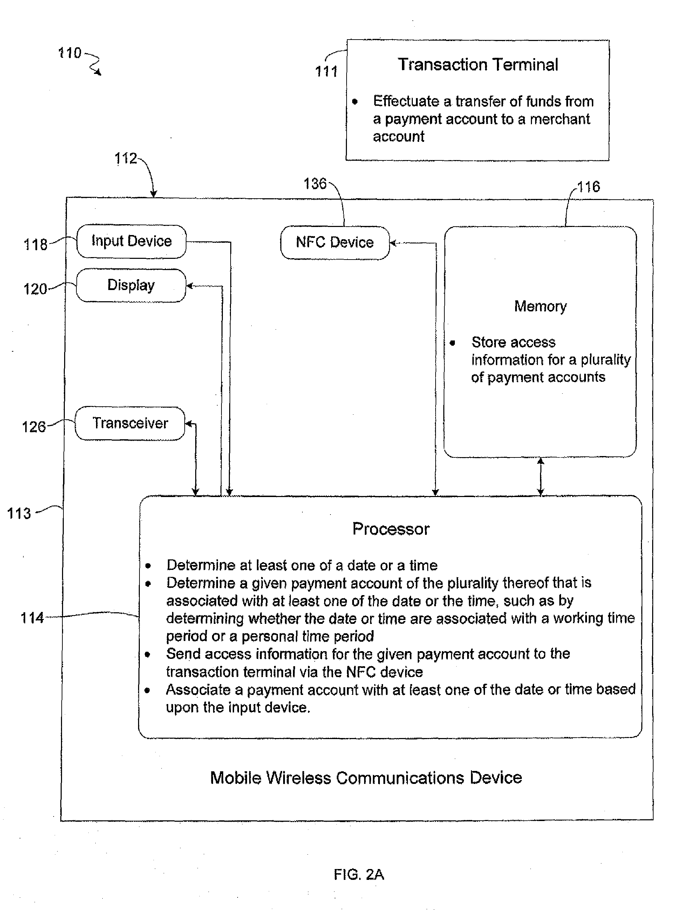

With reference to FIG. 2A, another example embodiment of a payment processing system **100** is now described. In this embodiment, the mobile wireless communications device **112** selects the payment account to send to the transaction terminal **111** based upon the date or time. The transaction terminal **111,** and most portions of the mobile wireless communications device **112** (the input device **118,** display **120,** transceiver **126,** and NFC device **136)** are similar to those described above and require no further discussion herein.

Here, the memory **116** is configured to store access information for a plurality of payment accounts. The processor **114** is configured to determine a date or a time, and to then determine a given payment account of the plurality thereof that is associated with that date or time. The processor **114** may determine which payment account is associated with the date or time by determining whether that date or time is associated with working hours or personal hours, for example. Alternatively, individual blocks of time unrelated to working or personal hours may be associated with a payment account, such as weekend and weekday blocks of time, and the processor **114** may make the determination of which payment account to use based upon those associations.

As an example, the processor **114** may determine that the current day is Monday, and that the current time is 11:15 AM. Accordingly, the processor **114** may determine that the current time falls within working hours, and therefore that a corporate credit card should be selected to be sent to the transaction terminal **111** via the NFC device **136.** As another example, the processor **114** may determine that the current date is Monday, and that the current time is 11:15 PM. Accordingly, the processor **114** may determine that the current time falls within personal hours, and that a personal credit card should therefore be selected to be sent to the transaction terminal **111** via the NFC device **136.**

It should be appreciated that the associations between the payment account and the date or time may be manually defined by the processor **114** based upon the input device. For example, while at a business location, processor **114** may display on the display **120** an association setting option allowing the association of the current time with a given payment account. Furthermore, the processor **114** may display a calendar on the display **120,** and times or dates associated with payment accounts may be selected from the calendar. Therefore, different dates and times may be associated with different payment accounts.

In some embodiments, these associations may be set on an external device, such as a personal computer, and may then be communicated to the mobile wireless communications device **112.** Furthermore, once set, these associations may be communicated to an external server, and the mobile wireless communications device **112** may download the associations upon boot-up or at another suitable time, for example.

Further, the processor **114** may execute a calendar application, and different payment accounts may be manually associated with different calendar events. For example, a corporate credit card may be associated with calendar events marked as "Lunch Meeting, during the work week, with co-workers or business contacts, etc."

In addition, as discussed above, the processor **114** may allow manual selection of a given payment account without executing the association setting option. Instead, the processor **114** may generate a usage history based upon the manually selected payment accounts, and may then generate the associations between the payment account and the date or time based upon the usage history. For example, if a corporate credit card is manually selected at 2:30 PM every Monday, the processor **114** may associate that corporate credit card with that time and date. The processor **114** may either generate this association without requesting confirmation via the input device **118,** or may request confirmation via the input device before generating the association.

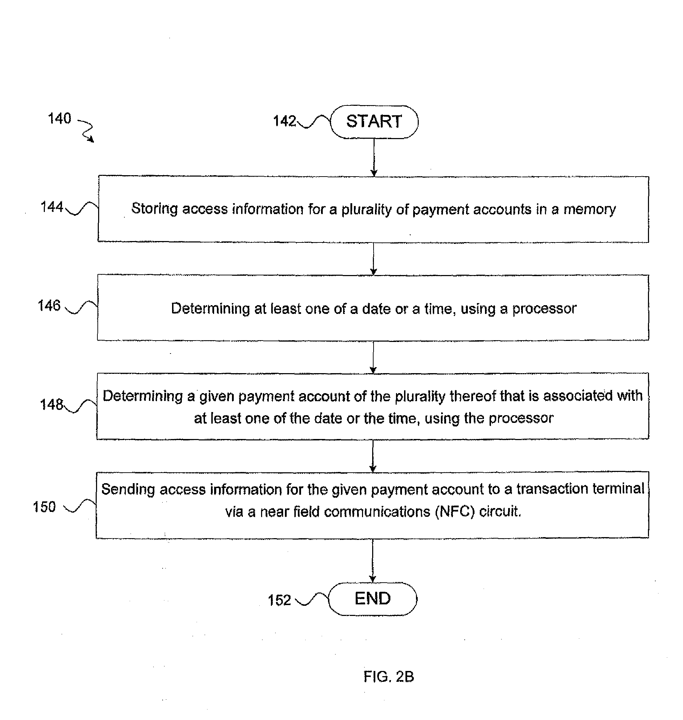

With reference to the flowchart **140** of FIG.2B, a method aspect of this embodiment is now described. After the start (Block **142),** access information for a plurality of payment accounts are stored in a memory (Block **144).** Next, at least one of a date or a time is determined using a processor (Block **146).** Thereafter, a given payment account of the plurality thereof that is associated with at least one of the date or the time is determined using the processor (Block **148).** Then, access information for the given payment account is sent to the transaction terminal via the NFC device **136.** (Block **150).** Block **152** indicates the end of the method.

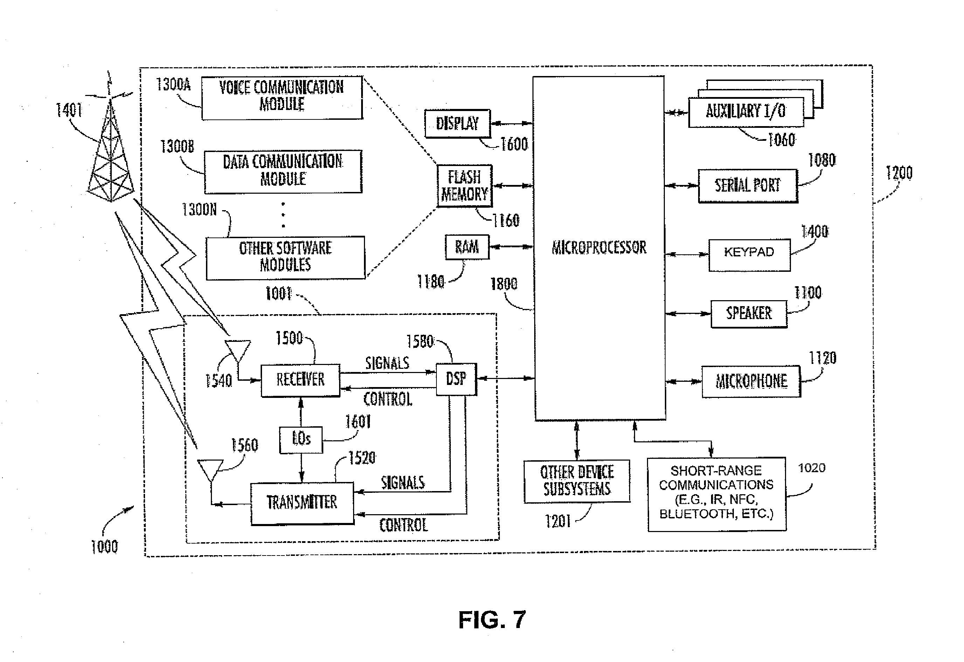

Example components of a mobile wireless communications device **1000** that may be used in accordance with the above-described embodiments are further described below with reference to FIG. 7. The device **1000** illustratively includes a housing **1200,** a keyboard or keypad **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 7. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) sensor for communicating with a NFC device or NFC tag via NFC communications.

Many modifications and other embodiments of the present disclosure will come to the mind of one skilled in the art having the benefit of the teachings presented in the foregoing descriptions and the associated drawings. Therefore, it is understood that the present disclosure is not to be limited to the specific embodiments disclosed, and that modifications and embodiments are intended to be included within the scope of the appended claims.

## Claims

1. A mobile wireless communications device comprising:
a near field communications (NFC) device;
a motion sensing device;
a memory configured to store access information for each of a plurality of payment accounts; and
a processor cooperating with said NFC device, said motion sensing device, and said memory, and configured to
recognize a movement pattern based upon said motion sensing device,
determine a given payment account from among the plurality thereof based upon the movement pattern, and
send corresponding access information for the given payment account to a transaction terminal via said NFC device.

2. The mobile wireless communications device of Claim 1 wherein said motion sensing device comprises at least one of an accelerometer, a gyroscope, a magnetometer, or an optical sensor.

3. The mobile wireless communications device of Claim 1 further comprising an input device; and wherein said processor is further configured to associate a payment account with a movement pattern based upon said input device.

4. The mobile wireless communications device of Claim 1 wherein said memory is configured to store a plurality of movement patterns; and wherein each of the plurality of payment accounts is associated with a given movement pattern.

5. The mobile wireless communications device of Claim 4 wherein said processor determines the given payment account by matching the recognized movement pattern to a stored movement pattern of the plurality thereof.

6. The mobile wireless communications device of Claim 1 further comprising a position determining device; wherein said processor is configured to cooperate with the position determining device to determine a geospatial location of the mobile wireless communications device when in proximity to a transaction terminal; and wherein said processor is configured to also determine the given payment account based upon the geospatial location.

7. The mobile wireless communications device of Claim 1 wherein said processor is configured to determine at least one of a date or a time; and wherein said processor is configured to also determine the given payment account based upon at least one of the date or the time.

8. A method of operating a mobile wireless communications device comprising:
storing access information for each of a plurality of payment accounts in a memory of the mobile wireless communications device;
recognizing movement of the mobile wireless communications in a movement pattern based upon a movement sensing device, using a processor of the mobile wireless communications device;
determining a given payment account from among the plurality thereof that is associated with the movement pattern, using the processor of the mobile wireless communications device; and
sending the corresponding access information for the given payment account to a transaction terminal via a near field communications (NFC) device of the mobile wireless communications device.

9. The method of Claim 8 wherein the motion sensing device of the mobile wireless communications device comprises at least one of an accelerometer, a gyroscope, a magnetometer, or an optical sensor.

10. The method of Claim 8 further comprising associating a payment account with a movement pattern based upon an input device of the mobile wireless communications device.

11. The method of Claim 8 further comprising storing a plurality of movement patterns in the memory, and associating each of the plurality of payment accounts with a given movement pattern, using the processor of the mobile wireless communications device.

12. The method of Claim 11 wherein the given payment account is determined by matching the recognized movement pattern to a stored movement pattern of the plurality thereof.

13. The method of Claim 8 further comprising determining a geospatial location of the mobile wireless communications device when in proximity to a transaction terminal based upon a position determining device of the mobile wireless communications device; and wherein the given payment account is also determined based upon the geospatial location.

14. The method of Claim 8 further comprising determining at least one of a date or a time; and wherein the given payment account is also determined based upon at least one of the date or the time.
